# EUROPEAN PATENT SPECIFICATION

(11) **EP 1 178 343 B1**
(45) Date of publication and mention of the grant of the patent: **25.02.2004**
(21) Application number: 01117193.1
(22) Date of filing: 16.07.2001
(51) Int. Cl.: G02B 13/14, G02B 17/06

(54) **Objective for infrared vision systems**
Objektiv für Infrarotbeobachtungssystem
Objectif pour système de vision infrarouge

(30) Priority: 01.08.2000 IT TO000767
(43) Date of publication of application: 06.02.2002
(73) Proprietor: C.R.F. Società Consortile per Azioni, 10043 Orbassano (Torino) (IT)
(72) Inventor: Repetto, Piermario, 10145 Torino (IT); Perlo, Piero, 12048 Sommariva Bosco, Cuneo (IT); Bigliati, Claudia, 13039 Trino, Vercelli (IT)
(74) Representative: Marchitelli, Mauro

(56) References cited:
- EP-A- 0 737 878
- GB-A- 2 233 854
- US-A- 3 708 222
- US-A- 4 784 700
- US-A- 5 087 116
- US-A- 5 896 237

## Description

The present invention relates to an objective for vision systems based upon thermal infrared radiation. In particular, the invention relates to an objective designed to be used in an infrared thermocamera for focusing the infrared image emitted by the scene (bands: MWIR3-5 micron, LWIR8-14 micron) on an array of sensors of the Focal Plane Array (FPA) type. The objective according to the present invention has been developed in particular for use with sensors of the non-cooled type (UFPA), for example resistive, ferroelectric, and thermo-electric bolometers, etc. The objective according to the invention may, however, be used also with sensors of the cooled type (photoconductive or photovoltaic sensors).

With an FPA sensor of 320x240 pixels and having dimensions of the active area of 16x12 mm and a pixel size of 50x50 micron, it is necessary for the size of the image point produced by the objective to be less than 50 micron. Normally, objectives for thermal infrared radiation comprise a pair of lenses made of semiconductor material, such as germanium, silicon, zinc arsenide, etc. These materials are extremely costly and call for precision machining.

US-A-5896237 discloses a sensor assembly including a radiant energy sensor, a pair of reflective walls facing one another, one of the walls having a transmissive aperture for receiving radiant energy over a wide angle of incidence, the other wall having a transmissive aperture for passing energy from behind the wall to the sensor, with the walls having the reflection characteristics such that the radiant energy entering an entry aperture at any angle is always reflected to an exit aperture. The reflective walls may be paraboloids or Fresnel surfaces in geometry.

EP-A-0737878 discloses an array detector system for imaging an object scene. The system includes catadioptric optics for providing a full format image of the object scene. The catadioptric optics include reflective objective optics for providing an intermediate image of the object scene and refractive relay optics for providing the full format image. The system further includes a staring detector for receiving the full format image.

The purpose of the present invention is to provide an objective for vision systems based upon thermal infrared radiation, with high resolution and a sensibly lower cost than that for known solutions.

According to the present invention, this purpose is achieved by an objective having the characteristics that form the subject of claim 1.

The present invention will now be described in detail with reference to the attached drawings, which are provided purely by way of non-limiting examples and in which:
- Figure 1 is a schematic side view of an objective according to the present invention;
- Figure 2 is a view at a larger scale of the part indicated by the arrow II of Figure 1;
- Figure 3 is a graph illustrating the resolution of the objective according to the present invention; and
- Figure 4 is a similar view to that of Figure 1 illustrating a variant of the objective according to the present invention.

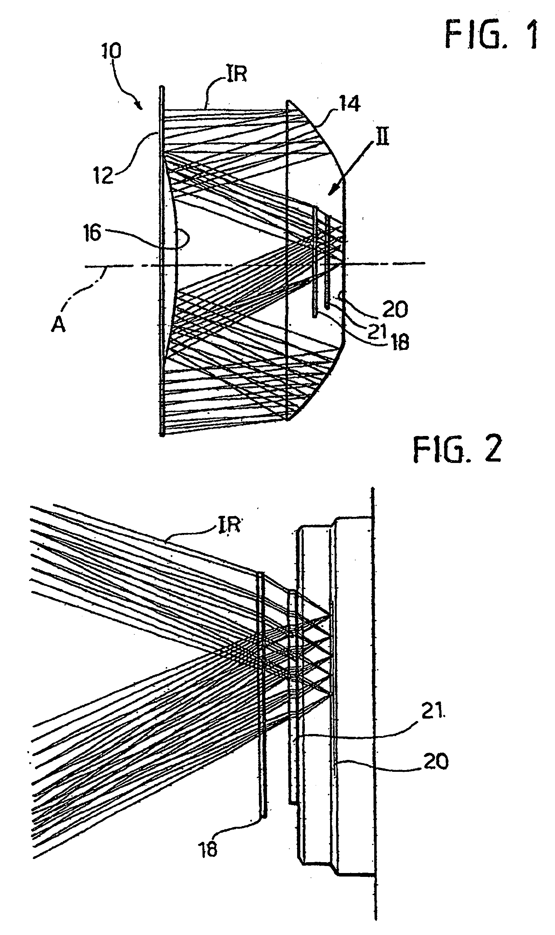

With reference to Figure 1, an objective according to the present invention for vision systems based upon thermal infrared radiation is designated by 10. The objective 10 is based upon the operating principle of the Cassegrain telescope and comprises a protective window 12 preferably made of silicon but which could also be made of Ge, ZnS, ZnSe), AMTIR calcogenide, TI or some other material transparent to infrared radiation. The objective 10 further comprises a primary Fresnel mirror 14 and a secondary Fresnel mirror 16. The primary Fresnel mirror 14 receives infrared radiation (designated by IR) coming from the scene along directions substantially parallel to an optical axis A of the objective and reflects the infrared radiation towards the secondary Fresnel mirror 16. The secondary Fresnel mirror 16 in turn reflects the infrared radiation towards a lens 18, which focuses said radiation onto an image plane containing a sensor 20, for instance of the UFPA type. As illustrated in Figure 2, between the lens 18 and the sensor 20 there may be set a window 21 made of germanium.

The two Fresnel mirrors 14, 16 are preferably made of moulded plastic material (for example, polycarbonate) of small thickness, preferably in the region of 2-3 mm. Each Fresnel mirror 14, 16 has a reflecting surface with an aspherical shape, symmetrical with respect to the optical axis A, and is provided, on the reflecting surface, with a series of microprojections, which also present a rotational symmetry with respect to the optical axis A. The aforesaid mirrors are coated with a layer of aluminium, silver or other metal so as to render them reflective to infrared radiation. Although one preferred embodiment of the invention envisages that the two Fresnel mirrors 14, 16 are made of moulded plastic material, these mirrors could also be obtained by direct machining.

The lens 18 may be made of semiconductor material, such as Ge, ZnSe, ZnS, calcogenide glass (e.g., TI20, . TI1173, AMTIR1, AMTIR3), or any other semiconductor material or vitreous material transparent to infrared radiation. According to another embodiment, the lens 18 is a Fresnel lens made of high-density polyethylene (HDPE). This lens is preferably plane, which makes it possible to obtain thicknesses of less than 0.5 mm by hot moulding. The Fresnel lens 18 may also have a spherical or aspherical shape. In the latter case, it is necessary to use an injection-moulding technique, which involves a minimum thickness of more than 0.5 mm and hence a lower transmittance to infrared radiation.

The shape of the aspherical caps of the mirrors 14, 16, of the surfaces of the lens 18, the shape and distribution of the Fresnel microprojections, and the mutual distance between the various optical elements of the objective are optimized so as to minimize any aberration on the image plane containing the sensor 20.

In a preferred embodiment of the objective according to the invention, the F number (i.e., the ratio between the effective focal length and the diameter of the entrance pupil) is 0.8-1; the diameter of the entrance pupil (mirror 14) is 80-90 mm; the diameter of the mirror 16 is 55-65 mm (the annulus corresponds to an equivalent pupil having a diameter of approximately 60 mm); the mirrors 14, 16 are at a distance apart from one another of 50-60 mm; the lens 18 is at a distance of 30-40 mm from the mirror 16; and the image plane 20 is at a distance of 2-6 mm from the lens 18.

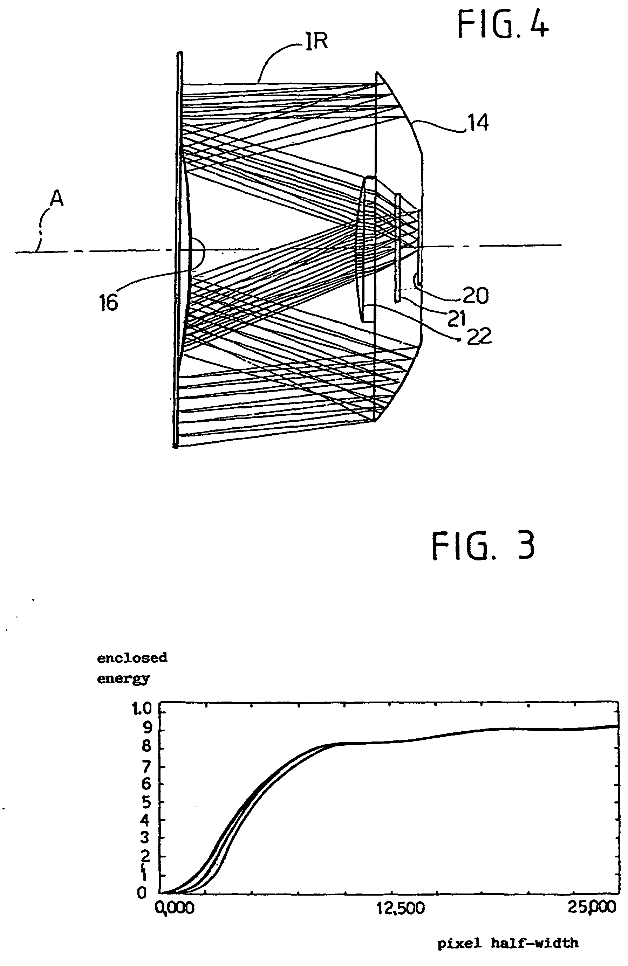

The graph of Figure 3 illustrates the percentage of energy enclosed in a pixel as a function of the half-width (in micron) of the pixel, with an objective of the type described previously and for different angles representative of the entire field of vision. Figure 3 shows that, if a pixel having a size of 50x50 micron (half-width of the pixel 25 micron) is considered, the percentage of energy enclosed in each pixel of the sensor S is higher than 90%. By optimizing the parameters of the system, it is possible to obtain dimensions of the image point of less than 40 micron over a field of vision of 12x9°.

The objective described enables a performance superior to that of an objective with two meniscus lenses made of germanium, but with a reduction in costs of several orders of magnitude. For instance, using an FPA sensor with 320x240 pixels having dimensions of the active area of 16x12 mm and pixel dimensions of 50x50 micron, it is necessary for the size of the image point to be less than 50 micron over the entire field of vision. To obtain this resolution with an objective using germanium lenses having an F number of 1.2, diameter of the entrance pupil of 70 mm, and a focal length of 84 mm, it is necessary to use three spherical lenses or else two lenses with at least one surface of one of the two lenses aspherical, which implies an increase in the fabrication cost.

The objective 10 can be provided with an antireflection coating on both surfaces of the protective window 12 to maximize transmittance of the infrared radiation. The secondary Fresnel mirror 16 may be glued onto the protective window 12 with a layer of adhesive. The lens 18 may be inserted in a frame (not illustrated) rigidly constrained to the primary Fresnel mirror 4. The said frame can be made directly by injection moulding of the mirror 14.

Figure 4 illustrates a variant of the objective according to the present invention, in which elements that correspond to the ones previously described are designated by the same reference numbers. In the variant of Figure 4, there has been introduced a lens 22,made of calcogenide glass (for example, AMTIR1/3), preferably consisting of a convex/plane spherical lens. The performance of the system thus modified remain substantially unaltered.

The objective according to the present invention can be provided with auxiliary devices, such as:
- an iris for modifying the F number of the objective;
- a device for mechanical adjustment of the distance between the optical elements 14, 16, 18 so as to enable a precise focusing of the image;
- a timed shutter for carrying out periodic recalibration of the IR telecamera;
- ribs or baffles provided on the internal surface of the casing to minimize the reflection of the radiation coming from angles outside the field of vision.

## Claims

1. An objective for vision systems based upon thermal infrared radiation, which comprises:
- a primary Fresnel mirror (14) set to receive the thermal infrared radiation (IR) along directions substantially parallel to an optical axis (A) of the objective (10);
- a secondary Fresnel mirror (16) set to receive the infrared radiation reflected by the primary Fresnel mirror (14); and
- a lens (18) set to receive the infrared radiation reflected by the secondary Fresnel mirror (16) and to focus said radiation onto an image plane (20), **characterized in that** the arrangement of the primary and the secondary mirrors is that of a Cassegrain telescope providing a high resolution image focussed onto a detector array.

2. The objective according to Claim 1, wherein each of said mirrors (14, 16) consists of an aspherical cap symmetrical with respect to the optical axis (A).

3. The objective according to Claim 2, wherein each of said mirrors (14, 16) is provided with a series of microprojections presenting rotational symmetry with respect to the aforesaid optical axis (A).

4. The objective according to Claim 1, wherein the aforesaid Fresnel mirrors are made of injection-moulded plastic material.

5. The objective according to Claim 4, wherein each of the aforesaid mirrors is coated with a metallic layer that reflects infrared radiation.

6. The objective according to Claim 1, wherein the aforesaid lens (18) is made of material that is transparent to infrared radiation, chosen from the group: Ge, ZnSe, ZnS, and calcogenide glass.

7. The objective according to Claim 6, wherein the aforesaid lens (18) is a convex/plane lens.

8. The objective according to Claim 1, wherein the aforesaid lens (18) is a Fresnel lens made of high-density polyethylene (HDPE).

9. The objective according to Claim 8, wherein the aforesaid Fresnel lens is a plane lens with a thickness of less than 0.5 mm.

10. The objective according to Claim 8, wherein the aforesaid Fresnel lens (18) has curved surfaces of a spherical or aspherical shape.

11. The objective according to Claim 1, wherein it comprises a protective window (12) made of a material that is transparent to infrared radiation, the aforesaid secondary Fresnel mirror (16) being fixed to an internal surface of said protective window (12).

12. The objective according to Claim 11, wherein the aforesaid protective window (12) is made of a material chosen from the group comprising silicon, zinc sulphide (ZnS), germanium (Ge), zinc selenide (ZnSe) and calcogenide glass.

13. The objective according to Claim 11, wherein the aforesaid window has an antireflection coating on both of its surfaces.

## Patentansprüche

1. Objektiv für Beobachtungssystem basierend auf Wärme-Infrarotstrahlung, das umfasst:
- einen primären Fresnelschen Spiegel (14) zum Empfangen der Wärme-Infrarotstrahlung (IR) entlang von Richtungen im Wesentlichen parallel zu einer optischen Achse (A) des Objektivs (10);
- einen sekundären Fresnelschen Spiegel (16) zum Empfangen der von dem primären Fresnelschen Spiegel (14) reflektierten Infrarotstrahlung; und
- eine Linse (18) zum Empfangen der von dem sekundären Fresnelschen Spiegel (16) reflektierten Infrarotstrahlung und Fokussieren der Strahlung auf eine Bildebene (20),
**dadurch gekennzeichnet, dass**
die Anordnung des primären und des sekundären Spiegels die eines Cassegrain-Teleskops ist, das eine auf eine Detektoranordnung fokussierte Abbildung mit hoher Auflösung bereitstellt.

2. Objektiv gemäß Anspruch 1, wobei jeder der Spiegel (14, 16) aus einer asphärischen Kappe besteht, die symmetrisch zur optischen Achse (A) ist.

3. Objektiv gemäß Anspruch 2, wobei jeder der Spiegel (14, 16) mit einer Reihe von Mikroprojektionen versehen ist, die Rotationssymmetrie bezüglich der vorgenannten optischen Achse (A) bereitstellen.

4. Objektiv gemäß Anspruch 1, wobei die vorgenannten Fresnelschen Spiegel aus Spritzguss-Kunststoffmaterial hergestellt sind.

5. Objektiv gemäß Anspruch 4, wobei jeder der vorgenannten Spiegel mit einer metallischen Schicht überzogen ist, die Infrarotstrahlung reflektiert.

6. Objektiv gemäß Anspruch 1, wobei die vorgenannte Linse (18) aus einem Werkstoff hergestellt ist, der durchlässig für Infrarotstrahlung ist, ausgewählt aus der Gruppe: Ge, ZnSe, ZnS, und Chalkogenidglas.

7. Objektiv gemäß Anspruch 6, wobei die vorgenannte Linse (18) eine konvexe/plane Linse ist.

8. Objektiv gemäß Anspruch 1, wobei die vorgenannte Linse (18) eine aus Hartpolyethylen (HDPE) hergestellte Fresnel-Linse ist.

9. Objektiv gemäß Anspruch 8, wobei die vorgenannte Fresnel-Linse eine plane Linse mit einer Stärke von weniger als 0,5 mm ist.

10. Objektiv gemäß Anspruch 8, wobei die vorgenannte Fresnel-Linse (18) gekrümmte Oberflächen mit sphärischer oder nichtsphärischer Gestaltung aufweist.

11. Objektiv gemäß Anspruch 1, das ein Schutzfenster (12) umfasst, das aus einem Werkstoff hergestellt ist, der durchlässig für Infrarotstrahlung ist, wobei der vorgenannte sekundäre Fresnelsche Spiegel (16) an einer Innenfläche des Schutzfensters (12) befestigt ist.

12. Objektiv gemäß Anspruch 11, wobei das vorgenannte Schutzfenster (12) aus einem Werkstoff hergestellt ist, der ausgewählt ist aus der Gruppe umfassend Silicium, Zinksulfid (ZnS), Germanium (Ge), Zinkselenid (ZnSe) und Chalkogenidglas.

13. Objektiv gemäß Anspruch 11, wobei das vorgenannte Fenster eine beidseitige Antireflexionsbeschichtung aufweist.

## Revendications

1. Objectif pour systèmes vidéo basés sur un rayonnement thermique à infrarouge qui comprend :
un miroir primaire (14) de Fresnel réglé pour recevoir le rayonnement thermique infrarouge (IR) suivant des directions pratiquement parallèles à l'axe optique (A) de l'objectif (10) ;
un miroir secondaire (16) de Fresnel réglé pour recevoir le rayonnement infrarouge réfléchi par le miroir primaire (14) de Fresnel ; et
une lentille de (18) réglé pour recevoir le rayonnement infrarouge réfléchi par le miroir secondaire (16) de Fresnel et pour focaliser ledit rayonnement sur un plan d'image (20), **caractérisé en ce que** :
l'agencement des miroirs primaire et secondaire est celui d'un télescope Cassegrain donnant une image à haute définition focalisée sur un groupement de détecteurs.

2. Objectif selon la revendication 1, dans lequel chacun desdits miroirs (14, 16) est constitué d'un couvercle asphérique symétrique par rapport à l'axe optique (A).

3. Objectif selon la revendication 2, dans lequel chacun desdits miroirs (14, 16) est pourvu d'une série de microprotubérances présentant une symétrie en rotation par rapport à l'axe optique (A) mentionné précédemment.

4. Objectif selon la revendication 1, dans lequel les miroirs de Fresnel mentionnés précédemment sont faits d'une matière plastique moulée par injection.

5. Objectif selon la revendication 4, dans lequel chacun des miroirs mentionnés précédemment est revêtu d'une couche métallique qui réfléchit le rayonnement infrarouge.

6. Objectif selon la revendication 1, dans lequel la lentille (18) mentionnée précédemment est faite d'une matière qui est transparente au rayonnement infrarouge choisie dans le groupe constitué : du Ge, du ZnSe, du ZnS, et du verre aux calcogénures.

7. Objectif selon la revendication 6, dans lequel la lentille (18) mentionnée précédemment est une lentille convexe/plane.

8. Objectif selon la revendication 1, dans lequel la lentille (18) mentionnée précédemment est une lentille de Fresnel faite de polyéthylène haute densité (HDPE).

9. Objectif selon la revendication 8, dans lequel la lentille de Fresnel mentionnée précédemment est une lentille plane avec une épaisseur inférieure à 0,5 mm.

10. Objectif selon la revendication 8, dans lequel la lentille (18) de Fresnel mentionnée précédemment a des surfaces incurvées d'une forme sphérique ou asphérique.

11. Objectif selon la revendication 1, dans lequel il comprend une fenêtre (12) de protection faite d'une matière qui est transparente au rayonnement infrarouge, le miroir secondaire (16) de Fresnel mentionné précédemment étant fixé à la face interne de ladite fenêtre (12) de protection.

12. Objectif selon la revendication 11, dans lequel la fenêtre (12) de protection mentionnée précédemment est faite d'une matière choisie dans le groupe comprenant le silicium, le sulfure de zinc (ZnS), le germanium (Ge), le séléniure de zinc (ZnSe) et le verre aux calcogénures.

13. Objectif selon la revendication 11, dans lequel la fenêtre mentionnée précédemment possède d'un revêtement antireflet en sur ses deux faces.
